# EUROPEAN PATENT SPECIFICATION

(11) **EP 3 086 495 B1**
(45) Date of publication and mention of the grant of the patent: **27.02.2019**
(21) Application number: 14883089.6
(22) Date of filing: 31.07.2014
(51) Int. Cl.: H04L 1/00

(54) **OVERHEAD INFORMATION TRANSMISSION METHOD, BASE STATION AND TERMINAL.**
ÜBERTRAGUNGSVERFAHREN FÜR OVERHEAD-INFORMATIONEN, BASISSTATION UND ENDGERÄT.
PROCÉDÉ DE TRANSMISSION D'INFORMATIONS DE SURDÉBIT, STATION DE BASE ET TERMINAL

(30) Priority: 18.02.2014 CN 201410055538
(43) Date of publication of application: 26.10.2016
(73) Proprietor: ZTE Corporation, Shenzhen, Guangdong 518057 (CN)
(72) Inventor: XIN, Yu, Shenzhen Guangdong 518057 (CN); HAO, Peng, Shenzhen Guangdong 518057 (CN); NI, Jia, Shenzhen Guangdong 518057 (CN); XU, Jun, Shenzhen Guangdong 518057 (CN)
(74) Representative: Brevalex
(86) International application number: PCT/CN2014/083415
(87) International publication number: WO 2015/123968

(56) References cited:
- WO-A1-2013/125843
- WO-A2-2011/053051
- CN-A- 1 643 837
- CN-A- 102 917 457
- LG ELECTRONICS: "Discussion on broadcasting dynamic network assistance information", 3GPP DRAFT; R1-140341, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050735888, Retrieved from the Internet: URL:http://www.3gpp.org/ftp/Meetings_3GPP_ SYNC/RAN/RAN1/Docs/ [retrieved on 2014-02-09]
- ZTE: "Consideration on Network Signalling and Coordination for NAICS", 3GPP DRAFT; R1-135380, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050735061, Retrieved from the Internet: URL:http://www.3gpp.org/ftp/Meetings_3GPP_ SYNC/RAN/RAN1/Docs/ [retrieved on 2013-11-13]
- NSN ET AL: "Network assistance for advanced receivers", 3GPP DRAFT; R1-140576, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050736103, Retrieved from the Internet: URL:http://www.3gpp.org/ftp/Meetings_3GPP_ SYNC/RAN/RAN1/Docs/ [retrieved on 2014-02-09]

## Description

### TECHNICAL FIELD

The present disclosure relates to data demodulation in the field of communications, and in particular to a method and system for transmitting overhead information, a base station (BS), and a User Equipment (UE).

### BACKGROUND

Long Term Evolution (LTE) technology applies to wireless cellular communication in Fourth Generation (4G) mobile communication technology. With a trend of increasingly dense deployment of mobile communication cells, inter-user interference becomes a major problem. At present, a number of advanced receiving algorithms have been proposed. Such advanced receiving algorithms may suppress some interference and improve demodulation performance of a receiving end. However, the advanced receiving algorithms of good interference suppression performance require acquisition of information on an interfering signal, such as information on a pilot, a Modulation and Coding Scheme (MCS), and the like.

A UE usually acquires information on an interfering signal from another user in two modes. In the first mode, the UE estimates information on the interfering signal using a blind detection algorithm. The first mode is complicated and tends to produce estimated information on the interfering signal with a certain error margin. In the second mode, a base station sends information on an interfering signal to the UE. The second mode is less complicated. The UE may acquire more accurate information on the interfering signal in the second mode. However, a drawback with the second mode is that sending the information on the interfering signal by the base station requires additional downlink overhead information. The more interfering signals there are, the more downlink overhead information will be. A focus of wireless communication system optimization is to reduce downlink overhead information.

In an LTE system, downlink overhead information is mainly sent on a downlink control channel. In order to reduce the downlink overhead information, adoption of a more advanced MCS may reduce performance of the UE in demodulating the downlink control channel. Sending the downlink overhead information on a downlink shared channel may increase a delay in acquiring the downlink overhead information by the UE. Moreover, the UE has to acquire information on the interfering signal before the UE can better demodulate data on the downlink shared channel.

Therefore, there lacks a solution for controlling an overhead for sending information on the interfering signal by a base station without impacting demodulation performance of a UE. There also lacks a solution for sending information on the interfering signal by a base station.

LG ELECTRONICS: "Discussion on broadcasting dynamic network assistance information", 3GPP, R1-140341, XP050735888, discloses: broadcasting dynamic network assistance information from an interfering cell with control channel overhead analysis, including what information to be signaled and how to signal it, interference parameters to be shared with a victim UE, where a serving cell of a victim UE signals the victim UE of semi-static NA information (cell ID, CRS antenna ports, etc.) via a control channel thereof/RRC signaling; interfering cell provides dynamic NA information, which can change subframe by subframe, via (e)PDCCH.

### SUMMARY

Embodiments herein provide a method and system for transmitting overhead information, a base station (BS), and a User Equipment (UE).

The invention is defined by the appended claims. The embodiments that do not fully fall under the scope of the claims have to be interpreted as examples useful for understanding the invention.

With a method and system for transmitting overhead information, a base station (BS), and a User Equipment (UE) according to embodiments herein, after receiving a parameter of downlink data processing capability sent by a UE, a base station sends DCI to the UE via a downlink control channel, the DCI comprising X bits indicating M sets of downlink reference information of other UEs other than the UE. The X is a positive integer. The M is a positive integer less than a numerical value represented by a parameter of downlink data processing capability of the UE. According to embodiments herein, a base station slightly increases an overhead of a downlink control channel according to a parameter of downlink data processing capability fed back by a UE, such that demodulation performance of the UE may be improved. Since the UE is required to feed back the parameter of downlink data processing capability just now and then, an uplink overhead occupied by the parameter of downlink data processing capability is almost ignorable.

### BRIEF DESCRIPTION OF THE DRAWINGS

In the drawings (not necessarily to scale), like reference signs may represent like parts in different views. Like reference signs with different letter suffixes may represent different examples of like parts. The drawings generally show various embodiments discussed herein in an exemplary non-limiting way.
Fig.1 is a flowchart of a method for transmitting overhead information according to an embodiment herein.
Fig.2 is a diagram of interference of downlink data of other UEs according to an embodiment herein.
Fig.3 is a diagram of a structure of a base station according to an embodiment herein.
Fig.4 is a diagram of a structure of a UE according to an embodiment herein.
Fig.5 is a diagram of a structure of a system for transmitting overhead information according to an embodiment herein.

### DETAILED DESCRIPTION

In an embodiment herein, after receiving a parameter of downlink data processing capability sent by a UE, a base station sends DCI to the UE via a downlink control channel, the DCI comprising X bits indicating M sets of downlink reference information of other UEs other than the UE. The X is a positive integer. The M is a positive integer less than a numerical value represented by a parameter of downlink data processing capability of the UE.

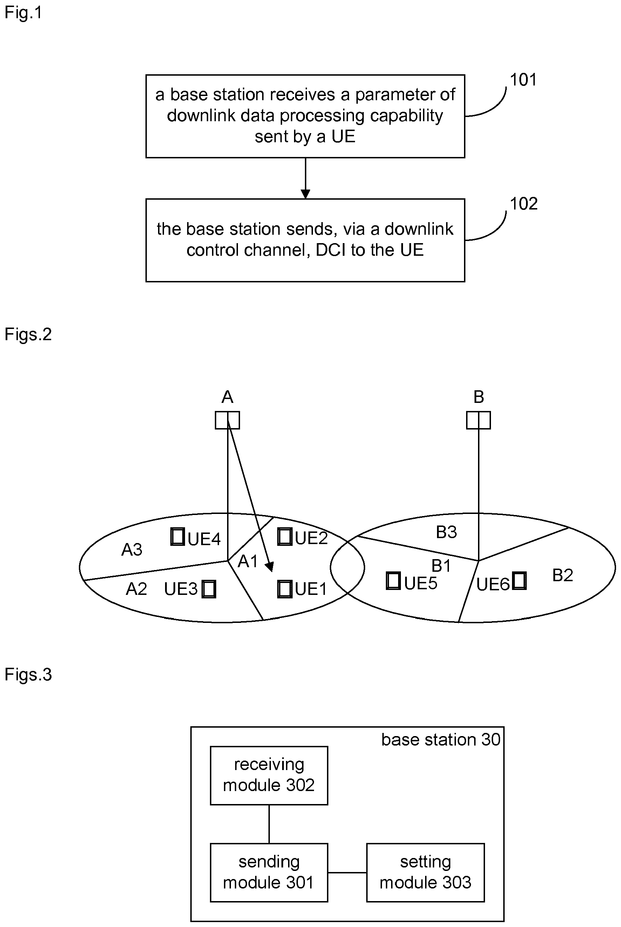

Fig.1 is a flowchart of a method for transmitting overhead information according to an embodiment herein. As shown in Fig.1, the method includes steps as follows.

In step 101, a base station receives a parameter of downlink data processing capability sent by a UE.

In step 102, the base station sends, via a downlink control channel, DCI to the UE. The DCI includes X bits indicating M sets of downlink reference information of other UEs other than the UE.

The X is a positive integer. The M is a positive integer less than a numerical value represented by a parameter of downlink data processing capability of the UE.

Data of the other UEs may occupy physical resources overlapping physical resources occupied by data of the UE.

The X may meet at least one of the following descriptions.

The X may be computed according to the M.

The X may vary dynamically in different Transmission Time Intervals (TTI).

The X may be no greater than a value set by a system Radio Resource Control protocol (RRC).

The X may be no greater than a value set by the system RRC according to the parameter of downlink data processing capability.

The X may be no greater than a value corresponding to the parameter of downlink data processing capability.

The parameter of downlink data processing capability may meet at least one of the following descriptions.

The parameter of downlink data processing capability may be represented by a maximal number of layers of downlink data within processing capability of the UE.

The maximal number of layers of downlink data within processing capability of the UE may be no less than a maximal number of layers of data within demodulation capability of the UE as represented by a UE Category parameter of the UE.

The parameter of downlink data processing capability may be represented by a number of degrees of freedom within processing capability of the UE.

The parameter of downlink data processing capability may be represented by a number of receiving antennae of the UE.

The parameter of downlink data processing capability may be set to the numerical value represented by the parameter of downlink data processing capability.

The parameter of downlink data processing capability may be set to the numerical value represented by the parameter of downlink data processing capability minus a maximal number of layers of data within demodulation capability of the UE as represented by a UE Category parameter of the UE.

The base station may receive the parameter of downlink data processing capability sent by the UE after sending the UE a UE Capability Enquiry.

The DCI may include an M indicating parameter. The M indicates the number of sets of downlink reference information to be sent by the base station.

The DCI may further include a parameter indicating update of the downlink reference information of the other UEs.

Each of the M sets of downlink reference information of the other UEs may include at least information on a user pilot.

The information on the user pilot may include at least a port (number) of a downlink reference signal.

When U of the M sets of downlink reference information of the other UEs belong to the other UEs served by one cell other than a cell serving the UE, information on a user pilot in at least one of the U sets of downlink reference information may include at least information on a Cell ID of the one cell where the information on the user pilot is sent. The U may be a positive integer no greater than the M.

Any cell other than the cell serving the UE may or may not belong to the base station.

The base station may pre-set a set containing parameters of downlink reference information of the other UEs. The base station may then select a sub-set of the set as the M sets of downlink reference information of the other UEs.

The base station may send the M sets of downlink reference information of the other UEs sequentially.

When cells serving L other UEs include a cell serving the UE and any cell other than the cell serving the UE, the base station may first send downlink reference information of the other UEs served by the cell serving the UE, and then send downlink reference information of the other UEs served by the any cell other than the cell serving the UE.

The L may be a positive integer no greater than the M. The L other UEs may be the other UEs corresponding to the M sets of downlink reference information sent by the base station.

The base station may send the M sets of downlink reference information of the other UEs sequentially according to intensities of interference of the other UEs to the UE.

According to an embodiment herein, a method for transmitting overhead information includes steps as follows.

A UE acquires, from DCI on a downlink control channel, N sets of downlink reference information of other UEs other than the UE.

The N may be a positive integer less than a numerical value represented by a parameter of downlink data processing capability of the UE. M sets of downlink reference information of the other UEs may be sent by a base station. The M may be a positive integer no less than the N.

Data of the other UEs may occupy physical resources overlapping physical resources occupied by data of the UE.

The UE may demodulate, according to the acquired downlink reference information of the other UEs and data scheduling information acquired from a downlink control channel, data sent by the base station.

The parameter of downlink data processing capability may meet at least one of the following descriptions.

The parameter of downlink data processing capability may be represented by a maximal number of layers of downlink data within processing capability of the UE.

The maximal number of layers of downlink data within processing capability of the UE may be no less than a maximal number of layers of data within demodulation capability of the UE as represented by a UE Category parameter of the UE.

The parameter of downlink data processing capability may be represented by a number of degrees of freedom within processing capability of the UE.

The parameter of downlink data processing capability may be represented by a number of receiving antennae of the UE.

The parameter of downlink data processing capability may be set to the numerical value represented by the parameter of downlink data processing capability.

The parameter of downlink data processing capability may be set to the numerical value represented by the parameter of downlink data processing capability minus a maximal number of layers of data within demodulation capability of the UE as represented by a UE Category parameter of the UE.

The UE may send the parameter of downlink data processing capability to the base station after receiving a UE Capability Enquiry sent by the base station.

Each of the N sets of downlink reference information of the other UEs may include at least information on a user pilot.

The information on the user pilot may include at least a port of a downlink reference signal.

When demodulating the data sent by the base station, the UE may perform interference suppression according to the acquired downlink reference information of the other UEs.

The UE may detect a data signal sent by the base station according to the acquired downlink reference information of the other UEs using a Minimum Mean Square

Error-Interference Rejection Combining (MMSE-IRC) advanced detection algorithm, and decode the detected data signal.

The present disclosure is elaborated below with reference to embodiments.

After acquiring information on an interfering signal, a UE may suppress some interference using an advanced receiving algorithm, improving demodulation performance of the UE. This may mean that a base station has to send the UE the information on the interfering signal, which will increase downlink overhead information. The more interfering signals there are, the more downlink overhead information will be, which may influence a downlink transmission performance.

Research shows that the UE may suppress an interfering signal to some extent; when a number of interfering signals exceeds processing capability of the UE, demodulation performance of the UE will not be improved by acquiring more information on the interfering signals.

Downlink data processing capability of the UE may be represented by a maximal number of layers of downlink data within processing capability of the UE. The maximal number of layers may depend on the number of receiving antennae of the UE. With a low correlation between the receiving antennae of the UE, the maximal number of layers may in general be the number of the receiving antennae of the UE. The maximal number of layers may also depend on the number of degrees of freedom within processing capability of the UE. Generally, the maximal number of layers may be equal to the number of degrees of freedom within processing capability of the UE.

The maximal number of layers of downlink data within processing capability of the UE (i.e., terminal) may be no less than a maximal number of layers of data within demodulation capability of the UE as represented by a UE Category parameter of the UE.

The UE may send the parameter of downlink data processing capability of the UE to the base station. The UE may send the parameter of downlink data processing capability to the base station after receiving an indication sent by the base station. The UE may send the parameter of downlink data processing capability to the base station after receiving a UE Capability Enquiry sent by the base station.

The base station may receive the parameter of downlink data processing capability sent by the UE. The base station may receive the parameter of downlink data processing capability sent by the UE after sending an indication to the UE. The base station may receive the parameter of downlink data processing capability sent by the UE after sending the UE a UE Capability Enquiry.

After acquiring the parameter of downlink data processing capability of the UE, the base station may send the UE information on other UEs (i.e., other users) having strongly interfering downlink data, and may send the UE no information on other users having but weakly interfering downlink data, such that the amount of downlink overhead information may be reduced. After obtaining the information on the other users having strongly interfering downlink data, the UE may suppress the interferences using an advanced demodulation algorithm, improving demodulation performance. Demodulation performance will not be improved much by acquiring by the UE the information on the other users having but weakly interfering downlink data. The fact that the UE acquires no information on the other users having but weakly interfering downlink data will not impact the effect of the advanced demodulation algorithm.

The other UEs having strongly interfering downlink data may refer to UEs receiving downlink data sent by the base station or other base stations strongly interfering with the data demodulation at the UE under consideration. The other UEs having but weakly interfering downlink data may refer to UEs receiving downlink data sent by the base station or other base stations barely interfering with the data demodulation at the UE under consideration. Herein, the other UEs having interfering downlink data may also be referred to as interfering UEs or interfering users.

The information on the other UEs may mainly include BS-sent downlink reference information relevant to the other UEs, such as a UE-Specific reference signal antenna port, a cell ID, etc. In an LTE system, a UE-Specific reference signal sometimes refers to a DeModulation Reference Signal (DMRS).

Having obtained the parameter of downlink data processing capability of the UE, the base station has to send information on other interfering UEs in some way or other. The base station may send information on other interfering users in DCI (also known as downlink control signalling) on the downlink control channel. In this way, the information may be conveniently received by the UE. In addition, a size of the DCI may be conveniently controlled. The base station may send the information on the other interfering users as follows.

The base station may send, on a downlink control channel, data scheduling information of the UE, and send, in DCI on a downlink control channel, the M sets of downlink reference information of the other UEs with data occupying physical resources overlapping those occupied by data of the UE. The M may be a positive integer less than the amount represented by the parameter of downlink data processing capability.

The downlink control channel bearing the data scheduling information may be in a Transmission Time Interval (TTI) identical to or different from a TTI including the downlink control channel bearing the DCI including the M sets of downlink reference information of the other UEs.

The base station may not be required to send the DCI in each TTI. That is, the base station may send no such DCI in some TTIs and send such DCI in some other TTIs.

The M sets of downlink reference information in the DCI may take up X bits. The X is a positive integer. The X may be computed according to the M. That is, a mathematical expression for computing the magnitude of the X may contain the parameter M. In other words, the size of the DCI may be computed according to the magnitude of the M. The magnitude of the X may also depend on the size of each set of information. The size of each set of information may be fixed or may vary slowly, while the M may vary quickly. The M may differ depending on different TTIs. Consequently, the magnitude of the X may vary dynamically in different TTIs. That is, the size of the DCI in one TTI may or may not be the same as the size of the DCI in another TTI.

The magnitude of the X may be set according to a value set by a system RRC, and may be no greater than the value set by the system RRC. The value set by the system RRC may be set according to the parameter of downlink data processing capability. The magnitude of the X may vary dynamically in different TTIs.

A value corresponding to the parameter of downlink data processing capability may be pre-set. The magnitude of the X may be no greater than the value corresponding to the parameter of downlink data processing capability.

A base station serving the other user(s) may be the base station or another base station. In a wireless communication system, a common base station may include one or more cells (or sectors) under its management.

A base station herein may be used to refer to a cell. For an LTE system, a base station herein may be used to refer to a cell of the LTE system. The cell serving the other user(s) may be the cell serving the UE, or may be some other cell(s).

By overlapping physical resources occupied by data of the UE, it means that physical resources occupied by downlink data sent by the base station to the UE overlap physical resources occupied by downlink data sent to the other UEs by the base station under consideration or by other base stations.

The physical resources may refer to wireless physical resources, defined by positions of data in a time domain and a frequency domain during wireless transmission. For the LTE system, physical resources may be defined in terms of Resource Elements (RE).

By overlapping, it means that a base station sends data to the UE on a physical resource, while the base station under consideration or another base station sends data also to another user on the same physical resource. Data sent to different users on a same physical resource may interfere with each other.

There may be a total of L of the other UEs. The L may be a positive integer no greater than the M.

Besides the other users, data of a further user may also be transmitted on the same physical resources, which may cause relatively weak interference to the UE. Therefore, the further user may be excluded from the other users.

The DCI may also include an M indicating parameter. The M may indicate the number of sets of downlink reference information to be sent by the base station.

The DCI may also include a parameter indicating update of downlink reference information of other UEs.

Each of the M sets of downlink reference information of the other UEs may include at least information on a user pilot.

The information on the user pilot may refer to information on a downlink reference signal relevant to a user sent by the base station, such as UE-Specific reference signals for data demodulation by the user.

The information on the user pilot may include at least a port of a downlink reference signal.

When U of the M sets of downlink reference information of the other UEs belong to the other UEs served by one cell other than a cell serving the UE, information on a user pilot in at least one of the U sets of downlink reference information may include at least information on a Cell ID of the one cell where the information on the user pilot is sent. The U may be a positive integer no greater than the M. If both the UE and one of the other UEs are served by the cell serving the UE, information on a pilot for the one of the other UEs may include no information on the Cell ID of the cell serving the UE.

The base station may pre-set a set containing parameters of downlink reference information of the other UEs. The base station may select a sub-set of the set as the M sets of downlink reference information of other UEs, and send the selected information in the DCI on the downlink control channel.

The base station may send the M sets of downlink reference information of other UEs sequentially (in a certain order).

When base stations serving the L other UEs include the base station under consideration and other base stations, the base station may first send information of other users served by the base station under consideration, and then send information of other users served by other base stations. The L other UEs may be the other UEs corresponding to the M sets of downlink reference information sent by the base station.

When cells serving the L other UEs include a cell serving the UE and any cell other than the cell serving the UE, the base station may first send information of the other users served by the cell serving the UE, and then send information of the other users served by the any cell other than the cell serving the UE. The L other UEs may be the other UEs corresponding to the M sets of downlink reference information sent by the base station.

Here, a base station and a cell may belong to the LTE system.

When physical resources occupied by data sent by the base station to the UE overlap physical resources occupied by data sent to the other UEs by the base station under consideration or by other base stations, the data sent to the other users may interfere with the data to be demodulated by the UE. Data sent to some of the other users may interfere strongly, while data sent to the rest of the other users may interfere weakly. Information of those other users having strongly interfering downlink data is more important to interference suppression performance of the demodulation algorithm of the UE.

The base station may send the M sets of downlink reference information of the other users (also referred to as the other UEs) sequentially according to intensities of interference of information (data) of the other users to the UE.

The base station may first send information of the other users strongly interfering with the UE, and then send information of the other users interfering with the UE more weakly.

The UE may acquire data scheduling information from a downlink control channel and acquires N sets of downlink reference information of other UEs from DCI on a downlink control channel. The N is a positive integer less than a numerical value represented by a parameter of downlink data processing capability.

M sets of downlink reference information of the other UEs are sent by a base station. The M is a positive integer no less than the N.

The downlink control channel where the UE acquires the data scheduling information may be in a TTI identical to or different from a TTI including the downlink control channel where the UE acquires the DCI including the M sets of downlink reference information of the other UEs.

The UE may demodulate data sent to the UE by the base station according to the acquired information.

Each of the N sets of downlink reference information of the other UEs may include at least information on a user pilot.

The information on the user pilot may include at least a port of a downlink reference signal.

Each set of information of the other UEs acquired by the UE may be less than each set of information of the other UEs sent by the base station.

When demodulating the data sent to the UE by the base station, the UE may perform interference suppression according to the acquired information to improve data demodulation performance of the UE.

The UE may detect a data signal sent to the UE by the base station using an MMSE-IRC advanced detection algorithm according to the acquired information, and then send the detected data signal into a decoding module for decoding.

Alternatively, the UE may demodulate the data signal sent to the UE by the base station using another advanced receiving algorithm according to the acquired information.

The method according to an embodiment herein may be elaborated below with reference to an application scenario.

Fig.2 is a diagram of interference of downlink data of other UEs according to an embodiment herein. In Fig.2, a base station A may contain three cells A1, A2, and A3. A base station B may contain three cells B1, B2, and B3. UE1 and UE2 may be served by cell A1. UE3 may be served by cell A2. UE4 may be served by cell A3. UE5 may be served by cell B1. UE6 may be served by cell B2.

Assume that UE1 has 4 receiving antennae, and can process a maximal number of 4 layers of downlink data. Assume that a UE category of UE1 is a category 4, meaning that the UE1 can demodulate a maximal number of 2 layers of data.

Assume that the base station A sends a single layer of data to the UE1 on a physical time-frequency resource. Namely, the base station A sends a single layer of downlink data to the UE1 on a physical time-frequency resource in the cell A1.

Further assume that the base station A sends in the cell A1, a single layer of data to the UE2 on the same physical time-frequency resource, the base station A sends in the cell A2, a single layer of data to the UE3 on the same physical time-frequency resource, the base station A sends in the cell A3, a single layer of data to the UE4 on the same physical time-frequency resource, the base station B sends in the cell B1, a single layer of data to the UE5 on the same physical time-frequency resource, and the base station B sends in the cell B2, a single layer of data to the UE6 on the same physical time-frequency resource. Thus, when demodulating downlink data sent thereto by the base station A, the UE1 may suffer from interference caused by downlink data of the other UEs of UE2 through UE6.

In order to suppress interference and improve demodulation performance, the UE1 may send a parameter of downlink data processing capability Q of the UE1 to the base station A. The parameter Q indicates that a maximal number of 4 layers of downlink data can be processed by the UE1. The Q may be set to 4 directly, Q=4. Alternatively, the Q may be set as a numerical value represented by the parameter of downlink data processing capability minus the maximal number of layers of data within demodulation capability of the UE as represented by the UE Category parameter of the UE, namely Q=4-2=2. Alternatively, a correspondence between the parameter Q and the maximal number of layers of downlink data within processing capability of the UE may be pre-set, and then Q may be set to a value corresponding to the maximal number of 4 layers of downlink data within processing capability of the UE1.

Since the UE1 can process a maximal number of 4 layers of downlink data, and the base station A sends a single layer of downlink data to the UE1, the UE1 can process a maximal number of 3 layers of other interfering data (4-1=3).

Assume that intensities of interference of the downlink data of the other UE2 through UE6 to the UE1 decreases in the order of UE5, UE2, UE3, UE4, and UE6. After receiving the Q sent by the UE1, the base station A may send three sets of downlink reference information of the UE2, the UE5 and the UE3 in DCI on a downlink control channel. Clearly, 3 is no greater than the maximal number of 4 layers of the downlink data within processing capability of the UE1.

Assume that the base station A allocates in the cell A1, a DMRS port AP1 to the UE2, and a Cell ID of the cell A1 is ID1; the base station A allocates in the cell A2, a DMRS port AP2 to the UE3, and a Cell ID of the cell A2 is ID2; and the base station B allocates in the cell B1, a DMRS port AP3 to the UE5, and a Cell ID of the cell B1 is ID3. The base station A may send in the cell A1, the three sets of downlink reference information ID3, AP3, AP1, ID2 and AP2 on the downlink control channel sequentially according to intensities of interference, or may send in the cell A1, the three sets of downlink reference information AP1, ID3, AP3, ID2 and AP2 sequentially by first sending information corresponding to the cell A1 serving the UE1 and then information corresponding to the other cells B1 and A2. As shown, in order to save downlink overhead information, the Cell ID of the cell A1, namely ID1, does not have to be sent. Of course, the Cell ID of the cell A1 serving the UE1 may as well be sent in order to facilitate sending by the base station and receiving by the UE.

A number of bits occupied by the three sets of downlink reference information sent in the downlink control channel by the base station A in the cell A1 may depend on 3, and may be computed according to the value 3. In this way, the base station A may pre-allocate physical time-frequency resources of a certain size for transmitting the three sets of downlink reference information. The base station A may send in the cell A1, only one or two sets of downlink reference information, or may send different sets of downlink reference information in different TTIs.

The base station A may set a value R via a system RRC according to the Q fed back by the UE1, such that the three sets of downlink reference information may take up no greater than R bits. If the three sets of downlink reference information take up more than R bits, the base station A may send in the cell A1, only one or two sets of downlink reference information.

The UE1 may acquire downlink data scheduling information from a downlink control channel in the cell A1, and acquire from a downlink control channel, the three sets of downlink reference information, or only one or two of the 3 sets of downlink reference information.

Each set of information of the other UEs acquired by the UE may be less than each set of information of the other UEs sent by the base station.

When demodulating the data sent to the UE by the base station, the UE may perform interference suppression according to the acquired information to improve data demodulation performance of the UE.

The UE may detect a data signal sent to the UE by the base station using an MMSE-IRC advanced detection algorithm according to the acquired information, and then send the detected data signal into a decoding module for decoding.

Alternatively, the UE may demodulate the data signal sent to the UE by the base station using another advanced receiving algorithm according to the acquired information.

As shown in Fig.3, a base station 30 according to an embodiment herein includes a sending module 301 configured for: sending, via a downlink control channel, a User Equipment (UE) Downlink Control Information (DCI). The DCI includes X bits indicating M sets of downlink reference information of other UEs other than the UE.

The X is a positive integer. The M is a positive integer less than a numerical value represented by a parameter of downlink data processing capability of the UE.

Data of the other UEs may occupy physical resources overlapping physical resources occupied by data of the UE.

The X may meet at least one of the following descriptions.

The X may be computed according to the M.

The X may vary dynamically in different Transmission Time Intervals (TTI).

The X may be no greater than a value set by a system Radio Resource Control protocol (RRC).

The X may be no greater than a value set by the system RRC according to the parameter of downlink data processing capability.

The X may be no greater than a value corresponding to the parameter of downlink data processing capability.

The parameter of downlink data processing capability may meet at least one of the following descriptions.

The parameter of downlink data processing capability may be represented by a maximal number of layers of downlink data within processing capability of the UE.

The maximal number of layers of downlink data within processing capability of the UE may be no less than a maximal number of layers of data within demodulation capability of the UE as represented by a UE Category parameter of the UE.

The parameter of downlink data processing capability may be represented by a number of degrees of freedom within processing capability of the UE.

The parameter of downlink data processing capability may be represented by a number of receiving antennae of the UE.

The base station may further include a receiving module 302 configured for: after the base station has sent the UE a UE Capability Enquiry, receiving the parameter of downlink data processing capability sent by the UE.

The base station may further include a setting module 303 configured for: pre-setting a set containing parameters of downlink reference information of the other UEs, and selecting a sub-set of the set as the M sets of downlink reference information of the other UEs.

The sending module 301 may be configured for sequentially sending the M sets of downlink reference information of the other UEs.

The sending module 301 may be configured for: when cells serving L other UEs comprise a cell serving the UE and any cell other than the cell serving the UE, first sending downlink reference information of the other UEs served by the cell serving the UE, and then sending downlink reference information of the other UEs served by the any cell other than the cell serving the UE.

The L may be a positive integer no greater than the M. The L other UEs may be the other UEs corresponding to the M sets of downlink reference information sent by the base station.

The sending module 301 may be configured for sequentially sending the M sets of downlink reference information of the other UEs according to intensities of interference of the other UEs to the UE.

In embodiments herein, the sending module 301, the receiving module 302, and the setting module 303 may be implemented by a Central Processing Unit (CPU), a Digital Signal Processor (DSP), or a Field-Programmable Gate Array (FPGA) in the base station 30.

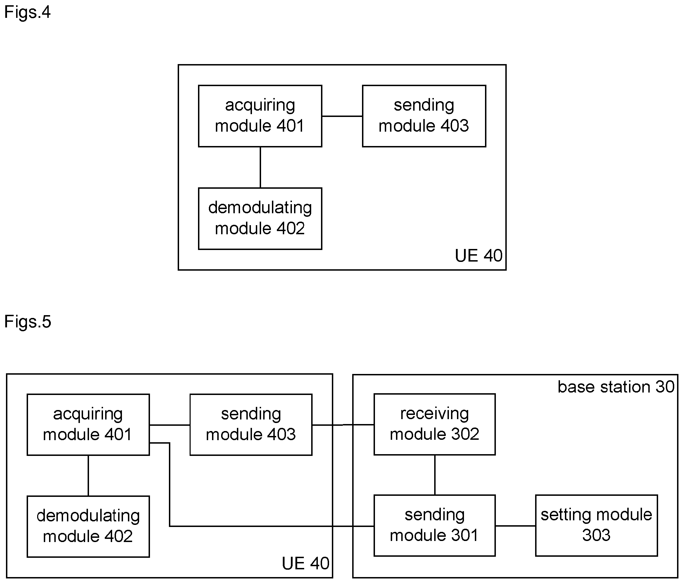

As shown in Fig.4, a UE 40 according to an embodiment herein includes an acquiring module 401 configured for acquiring, from Downlink Control Information (DCI) on a downlink control channel, N sets of downlink reference information of other UEs other than the UE.

The N may be a positive integer less than a numerical value represented by a parameter of downlink data processing capability of the UE. M sets of downlink reference information of the other UEs may be sent by a base station. The M may be a positive integer no less than the N.

Data of the other UEs may occupy physical resources overlapping physical resources occupied by data of the UE.

The UE may further include a demodulating module 402 configured for demodulating, according to the downlink reference information of the other UEs acquired by the acquiring module and data scheduling information acquired from a downlink control channel, data sent by the base station.

The acquiring module 401 may be further configured for acquiring the data scheduling information from the downlink control channel.

The UE may further include a sending module 403 configured for: after the UE has received a UE Capability Enquiry sent by the base station, sending the parameter of downlink data processing capability to the base station.

The demodulating module 402 may be further configured for: when demodulating the data sent by the base station, performing interference suppression according to the acquired downlink reference information of the other UEs.

The demodulating module 402 may be further configured for: detecting, according to the acquired downlink reference information of the other UEs using a Minimum Mean Square Error-Interference Rejection Combining (MMSE-IRC) advanced detection algorithm, a data signal sent by the base station, and decoding the detected data signal.

The acquiring module 401, the demodulating module 402, and the sending module 403 may be implemented by a CPU, a DSP, or an FPGA in the UE 40.

As shown in Fig.5, a system system for transmitting overhead information according to an embodiment herein includes the base station 30 and the UE 40.

According to embodiments herein, a base station slightly increases an overhead of a downlink control channel according to a parameter of downlink data processing capability fed back by a UE, such that demodulation performance of the UE may be improved. Since the UE is required to feed back the parameter of downlink data processing capability just now and then, an uplink overhead occupied by the parameter of downlink data processing capability is almost ignorable.

Those skilled in the art will know that an embodiment herein may be provided as a method, system, or computer program product. Therefore, an embodiment herein may take on a form of hardware, software, or a combination thereof. In addition, an embodiment herein may take on a form of a computer program product implemented on one or more computer available storage media (including but not limited to, magnetic disk memory, optic memory, and the like) containing computer available program codes.

The present disclosure is illustrated with reference to flowcharts and/or block diagrams of the method, device (system) and computer-program product according to embodiments described herein. Note that each flow in the flowcharts and/or each block in the block diagrams as well as combination of flows in the flowcharts and/or blocks in the block diagrams may be implemented by instructions of a computer program. Such instructions may be offered in a processor of a general-purpose computer, a dedicated computer, an embedded processor or other programmable data processing devices to generate a machine, such that a device with a function specified in one or more flows of the flowcharts and/or one or more blocks in the block diagrams is produced by instructions executed by a processor of a computer or other programmable data processing devices.

These computer-program instructions may also be stored in a non-transitory computer-readable memory capable of guiding a computer or another programmable data processing device to work in a given way, such that the instructions stored in the computer-readable memory generate a manufactured good including an instruction device for implementing a function specified in one or more flows of the flowcharts and/or one or more blocks in the block diagrams.

These computer-program instructions may also be loaded in a computer or other programmable data processing devices, which thus executes a series of operations thereon to generate computer-implemented processing, such that the instructions executed on the computer or other programmable data processing devices provide the steps for implementing the function specified in one or more flows of the flowcharts or one or more blocks in the block diagrams.

## Claims

1. A method for transmitting overhead information, comprising:
receiving, by a base station serving a User Equipment, abbreviated as UE, a parameter of downlink data processing capability of the UE sent by the UE (101), the parameter of downlink data processing capability comprising information on a number of receiving antennae of the UE;
sending, by the base station via a downlink control channel, Downlink Control Information, abbreviated as DCI, to the UE (102), the DCI comprising X bits indicating M sets of downlink reference information comprising M UE-Specific reference signal antenna ports of interfering UEs receiving downlink data interfering with data demodulation at the UE,
wherein the X is a positive integer depending on the M and a size of each set of the downlink reference information, and the M is a positive integer less than a numerical value represented by the parameter of downlink data processing capability of the UE.

2. The method according to claim 1, wherein the downlink data sent to the interfering UEs occupy physical resources overlapping physical resources occupied by downlink data sent by the base station to the UE,
wherein the X varies dynamically in different Transmission Time Intervals, abbreviated as TTI,
wherein the X is no greater than a value set by a system Radio Resource Control protocol, abbreviated as RRC,
wherein the X is no greater than a value set by the system RRC according to the parameter of downlink data processing capability,
wherein the X is no greater than a value corresponding to the parameter of downlink data processing capability,
wherein the parameter of downlink data processing capability is represented by a maximal number of layers of downlink data within processing capability of the UE,
the maximal number of layers of downlink data within processing capability of the UE being no less than a maximal number of layers of data within demodulation capability of the UE as represented by a UE Category parameter of the UE,
wherein the parameter of downlink data processing capability is represented by a number of degrees of freedom within processing capability of the UE.

3. The method according to claim 1, wherein the parameter of downlink data processing capability is set to the numerical value represented by the parameter of downlink data processing capability minus a maximal number of layers of data within demodulation capability of the UE as represented by a UE Category parameter of the UE.

4. The method according to any one of claims 1 to 3, further comprising:
before the receiving the parameter of downlink data processing capability of the UE sent by the UE, sending, by the base station, the UE a UE Capability Enquiry,
wherein the DCI comprises an M indicating parameter indicating the number of sets of downlink reference information to be sent by the base station,
wherein the DCI further comprises a parameter indicating update of the downlink reference information of the interfering UEs,
wherein each of the M sets of downlink reference information of the interfering UEs comprises at least information on a user pilot,
wherein the information on the user pilot comprises at least a port of a downlink reference signal.

5. The method according to any one of claims 1 to 3, wherein when U of the M sets of downlink reference information of the interfering UEs belong to the interfering UEs served by one cell other than a cell serving the UE, information on a user pilot in at least one of the U sets of downlink reference information comprises at least information on a Cell ID of the one cell where the information on the user pilot is sent, the U being a positive integer no greater than the M.

6. The method according to any one of claims 1 to 3, further comprising:
pre-setting, by the base station, a set containing parameters of downlink reference information of the interfering UEs, and selecting a sub-set of the set as the M sets of downlink reference information of the interfering UEs.

7. The method according to any one of claims 1 to 3, further comprising:
sequentially sending, by the base station, the M sets of downlink reference information of the interfering UEs,
or when cells serving L interfering UEs comprise a cell serving the UE and any cell other than the cell serving the UE, first sending, by the base station, downlink reference information of the interfering UEs served by the cell serving the UE, and then sending downlink reference information of the interfering UEs served by the any cell other than the cell serving the UE, wherein the L is a positive integer no greater than the M, and the L interfering UEs are the interfering UEs corresponding to the M sets of downlink reference information sent by the base station,
or sequentially sending, by the base station, the M sets of downlink reference information of the interfering UEs according to intensities of interference of the interfering UEs to the UE.

8. A method for transmitting overhead information, comprising: sending, by a User Equipment, abbreviated as UE, a parameter of downlink data processing capability of the UE to a base station serving the UE, the parameter of downlink data processing capability comprising information on a number of receiving antennae of the UE; acquiring, by the UE from X bits in Downlink Control Information, abbreviated as DCI, sent by the base staion on a downlink control channel, N of M sets of downlink reference information comprising M UE-Specific reference signal antenna ports of interfering UEs receiving downlink data interfering with data demodulation at the UE, wherein the X is a positive integer depending on the M and a size of each set of the downlink reference information, and the M is a positive integer less than a numerical value represented by the parameter of downlink data processing capability of the UE, and the N is a positive integer no greater than the M.

9. The method according to claim 8, wherein the downlink data sent to the interfering UEs occupy physical resources overlapping physical resources occupied by downlink data sent by the base station to the UE, wherein the method further comprises:
demodulating, by the UE according to the acquired N sets of downlink reference information of the interfering UEs and data scheduling information acquired from a downlink control channel, data sent by the base station;
when demodulating the data sent by the base station, performing, by the UE, interference suppression according to the acquired N sets of downlink reference information of the interfering UEs.

10. The method according to claim 8, wherein the parameter of downlink data processing capability is represented by a maximal number of layers of downlink data within processing capability of the UE,
the maximal number of layers of downlink data within processing capability of the UE being no less than a maximal number of layers of data within demodulation capability of the UE as represented by a UE Category parameter of the UE,
wherein the parameter of downlink data processing capability is represented by a number of degrees of freedom within processing capability of the UE.

11. The method according to claim 8, wherein the parameter of downlink data processing capability is set to the numerical value represented by the parameter of downlink data processing capability minus a maximal number of layers of data within demodulation capability of the UE as represented by a UE Category parameter of the UE.

12. The method according to any one of claims 8 to 11, further comprising:
before the sending the parameter of downlink data processing capability of the UE to the base station, receiving, by the UE, a UE Capability Enquiry sent by the base station.

13. The method according to any one of claims 8 to 11, wherein each of the N sets of downlink reference information of the interfering UEs comprises at least information on a user pilot,
wherein the information on the user pilot comprises at least a port of a downlink reference signal.

14. The method according to any one of claims 8 to 11, further comprising:
detecting, by the UE according to the acquired N sets of downlink reference information of the interfering UEs using a Minimum Mean Square Error-Interference Rejection Combining, abbreviated as MMSE-IRC, advanced detection algorithm, a data signal sent by the base station, and decoding the detected data signal.

15. A base station, comprising:
a receiving module (302) configured for: receiving a parameter of downlink data processing capability sent by a User Equipment, abbreviated as UE, served by the base station, the parameter of downlink data processing capability comprising information on a number of receiving antennae of the UE; and
a sending module (301) configured for: sending, via a downlink control channel, Downlink Control Information, abbreviated as DCI, to the UE, the DCI comprising X bits indicating M sets of downlink reference information comprising M UE-Specific reference signal antenna ports of interfering UEs receiving downlink data interfering with data demodulation at the UE,
wherein the X is a positive integer depdending on the M and a size of each set of the downlink reference information, and the M is a positive integer less than a numerical value represented by the parameter of downlink data processing capability of the UE.

16. The base station according to claim 15, wherein the downlink data sent to the interfering UEs occupy physical resources overlapping physical resources occupied by downlink data sent by the base station to the UE,
wherein the X varies dynamically in different Transmission Time Intervals, abbreviated as TTI,
wherein the X is no greater than a value set by a system Radio Resource Control protocol, abbreviated as RRC,
wherein the X is no greater than a value set by the system RRC according to the parameter of downlink data processing capability,
wherein the X is no greater than a value corresponding to the parameter of downlink data processing capability,
wherein the parameter of downlink data processing capability is represented by a maximal number of layers of downlink data within processing capability of the UE,
the maximal number of layers of downlink data within processing capability of the UE being no less than a maximal number of layers of data within demodulation capability of the UE as represented by a UE Category parameter of the UE;
wherein the parameter of downlink data processing capability is represented by a number of degrees of freedom within processing capability of the UE.

17. The base station according to claim 15, wherein the sending module (301) is further configured for: before the receiving module (302) receives the parameter of downlink data processing capability of the UE sent by the UE, sending the UE a UE Capability Enquiry.

18. The base station according to any one of claims 15 to 17, further comprising a setting module (303) configured for: pre-setting a set containing parameters of downlink reference information of the interfering UEs, and selecting a sub-set of the set as the M sets of downlink reference information of the interfering UEs.

19. The base station according to any one of claims 15 to 17, wherein the sending module (301) is configured for:
sequentially sending the M sets of downlink reference information of the interfering UEs,
or when cells serving L interfering UEs comprise a cell serving the UE and any cell other than the cell serving the UE, first sending downlink reference information of the interfering UEs served by the cell serving the UE, and then sending downlink reference information of the interfering UEs served by the any cell other than the cell serving the UE, wherein the L is a positive integer no greater than the M, and the L interfering UEs are the interfering UEs corresponding to the M sets of downlink reference information sent by the base station,
or sequentially sending the M sets of downlink reference information of the interfering UEs according to intensities of interference of the interfering UEs to the UE.

20. A User Equipment, abbreviated as UE, comprising:
a sending module (403) configured for: sending a parameter of downlink data processing capability of the UE to a base station serving the UE, the parameter of downlink data processing capability comprising information on a number of receiving antennae of the UE; and
an acquiring module (401) configured for acquiring, from X bits in Downlink Control Information, abbreviated as DCI, sent by the base staion on a downlink control channel, N of M sets of downlink reference information comprising M UE-Specific reference signal antenna ports of interfering UEs receiving downlink data interfering with data demodulation at the UE,
wherein the X is a positive integer depdending on the M and a size of each set of the downlink reference information, and the M is a positive integer less than a numerical value represented by the parameter of downlink data processing capability of the UE, and the N is a positive integer no greater than the M.

21. The UE according to claim 20, wherein the downlink data sent to the interfering UEs occupy physical resources overlapping physical resources occupied by downlink data sent by the base station to the UE,
wherein the UE further comprises a demodulating module (402) configured for demodulating, according to the acquired N sets of downlink reference information of the interfering UEs and data scheduling information acquired from a downlink control channel, data sent by the base station, wherein
the acquiring module (401) is further configured for acquiring the data scheduling information from the downlink control channel,
wherein the demodulating module (402) is further configured for: when demodulating the data sent by the base station, performing interference suppression according to the acquired N sets of downlink reference information of the interfering UEs.

22. The UE according to any one of claims 20 to 21, wherein the acquiring module (401) is further configured for: before the sending module (403) sends the parameter of downlink data processing capability of the UE to the base station, receiving a UE Capability Enquiry sent by the base station.

23. The UE according to any one of claims 20 to 21, wherein the demodulating module (402) is further configured for: detecting, according to the acquired N sets of downlink reference information of the interfering UEs using a Minimum Mean Square Error-Interference Rejection Combining, abbreviated as MMSE-IRC, advanced detection algorithm, a data signal sent by the base station, and decoding the detected data signal.

## Patentansprüche

1. Verfahren zum Übertragen von Verwaltungsdateninformationen, umfassend:
Empfangen, durch eine Basisstation, die als Nutzergerät, abgekürzt als UE, dient, eines Parameters eines Downlink-Datenverarbeitungsvermögens des UE, der durch das UE gesendet worden ist (101), wobei der Parameter des Downlink-Datenverarbeitungsvermögens Informationen über eine Anzahl von Empfangsantennen des UE umfasst;
Senden, durch die Basisstation über einen Downlinksteuerkanal, von Downlink-Steuerinformationen, abgekürzt als DCI, zu dem UE (102), wobei die DCI X Bits umfassen, die M Sätze von Downlink-Referenzinformationen angeben, die M UE-spezifische Referenzsignalantennenports von interferierenden UEs umfassen, die Downlink-Daten empfangen, die mit einer Datendemodulation bei dem UE interferieren,
wobei das X eine positive ganze Zahl ist, die von dem M und der Größe jedes Satzes der Downlink-Referenzinformationen abhängt, und das M eine positive ganze Zahl ist, die kleiner ist als ein Zahlenwert, der durch den Parameter des Downlink-Datenverarbeitungsvermögens des UE dargestellt wird.

2. Verfahren nach Anspruch 1, bei dem die Downlink-Daten, die zu den interferierenden UEs gesendet werden, physikalische Resourcen belegen, die physikalische Resourcen überlappen, die durch die Downlink-Daten belegt werden, die durch die Basisstation zu dem UE gesendet werden,
wobei das X dynamisch in verschiedenen Übertragungszeitintervallen, abgekürzt als TTI, variiert,
wobei das X nicht größer als ein Wert ist, der durch ein System-Funkresourcensteuerungsprotokoll (System-"Radio Resource Control"-Protokoll), abgekürzt als RRC, eingestellt wird,
wobei das X nicht größer als ein Wert ist, der durch das RRC gemäß dem Parameter des Downlink-Datenverarbeitungsvermögens eingestellt wird,
wobei das X nicht größer als ein Wert ist, der dem Parameter des Downlink-Datenverarbeitungsvermögens entspricht,
wobei der Parameter des Downlink-Datenverarbeitungsvermögens durch eine maximale Anzahl von Schichten von Downlink-Daten innerhalb des Verarbeitungsvermögens des UE dargestellt wird,
wobei die maximale Anzahl von Schichten von Downlink-Daten innerhalb des Verarbeitungsvermögens des UE nicht kleiner ist als eine maximale Anzahl von Schichten von Daten innerhalb des Demodulationsvermögens des UE, das durch einen UE-Kategorieparameter des UE dargestellt ist,
wobei der Parameter des Downlink-Datenverarbeitungsvermögens durch eine Anzahl von Freiheitsgraden innerhalb des Verarbeitungsvermögens des UE dargestellt wird.

3. Verfahren nach Anspruch 1, bei dem der Parameter des Downlink-Datenverarbeitungsvermögens auf den Zahlenwert eingestellt wird, der durch den Parameter des Downlink-Datenverarbeitungsvermögens abzüglich einer maximalen Anzahl von Schichten von Daten innerhalb des Demodulationsvermögens des UE dargestellt ist, das durch einen UE-Kategorieparameter des UE dargestellt ist.

4. Verfahren nach einem der Ansprüche 1 bis 3, ferner umfassend:
vor dem Empfangen des Parameters des Downlink-Datenverarbeitungsvermögens des UE, der durch das UE gesendet worden ist, Senden, durch die Basisstation, einer UE-Vermögen-Anfrage zu dem UE,
wobei die DCI einen M-angebenden Parameter umfassen, der die Anzahl von Sätzen von Downlink-Referenzinformationen angibt, die durch die Basisstation gesendet werden sollen,
wobei die DCI ferner einen Parameter umfassen, der eine Aktualisierung der Downlink-Referenzinformationen der interferierenden UEs angibt,
wobei jeder der M Sätze von Downlink-Referenzinformationen der interferierenden UEs mindestens Informationen über einen Nutzerpiloten umfasst,
wobei die Informationen über den Nutzerpiloten mindestens einen Port eines Downlink-Referenzsignals umfassen.

5. Verfahren nach einem der Ansprüche 1 bis 3, bei dem, wenn U der M Sätze von Downlink-Referenzinformationen der interferierenden UEs zu den interferierenden UEs gehören, die von einer Zelle bedient werden, die von einer Zelle verschieden ist, die das UE bedient, Informationen über den Nutzerpiloten in mindestens einem der U Sätze von Downlink-Referenzinformationen mindestens Informationen über eine Zellen-ID der einen Zelle umfassen, wo die Informationen über den Nutzerpiloten gesendet werden, wobei das U eine positive ganze Zahl ist, die nicht größer als das M ist.

6. Verfahren nach einem der Ansprüche 1 bis 3, ferner umfassend:
Voreinstellen, durch die Basisstation, eines Satzes, der Parameter von Downlink-Referenzinformationen der interferierenden UEs enthält, und Auswählen eines Teilsatzes des Satzes als die M Sätze von Downlink-Referenzinformationen der interferierenden UEs.

7. Verfahren nach einem der Ansprüche 1 bis 3, ferner umfassend:
sequenzielles Senden, durch die Basisstation, der M Sätze von Downlink-Referenzinformationen der interferierenden UEs,
oder wenn Zellen, die L interferierende UEs bedienen, eine Zelle, die das UE bedient, und jedwede Zelle, die von der Zelle verschieden ist, die das UE bedient, umfassen, zuerst Senden, durch die Basisstation, von Downlink-Referenzinformationen der interferierenden UEs, die durch die Zelle bedient werden, die das UE bedient, und dann Senden von Downlink-Referenzinformationen der interferierenden UEs, die durch jedwede Zelle bedient werden, die von der Zelle verschieden ist, die das UE bedient, wobei L eine positive ganze Zahl ist, die nicht größer ist als das M, und die L interferierenden UEs die interferierenden UEs sind, die den M Sätzen von Downlink-Referenzinformationen, die durch die Basisstation gesendet werden, entsprechen,
oder sequenzielles Senden, durch die Basisstation, der M Sätze von Downlink-Referenzinformationen der interferierenden UEs gemäß Intensitäten der Interferenz der interferierenden UEs zu dem UE.

8. Verfahren zum Übertragen von Verwaltungsdateninformationen, umfassend:
Senden, durch ein Nutzergerät, abgekürzt als UE, eines Parameters eines Downlink-Datenverarbeitungsvermögens des UE, zu einer Basisstation, die das UE bedient, wobei der Parameter des Downlink-Datenverarbeitungsvermögens Informationen über eine Anzahl von Empfangsantennen des UE umfasst;
Erfassen, durch die UE, von X Bits in Downlink-Steuerinformationen, abgekürzt als DCI, die durch die Basistation auf einem Downlink-Steuerkanal gesendet werden, von N von M Sätzen von Downlink-Referenzinformationen, die M UE-spezifische Referenzsignalantennenports von interferierenden UEs umfassen, die Downlink-Daten empfangen, die mit einer Datendemodulation bei dem UE interferieren,
wobei das X eine positive ganze Zahl ist, die von dem M und der Größe jedes Satzes der Downlink-Referenzinformationen abhängt, und das M eine positive ganze Zahl ist, die kleiner ist als ein Zahlenwert, der durch den Parameter des Downlink-Datenverarbeitungsvermögens des UE dargestellt wird, und das N eine positive ganze Zahl von nicht größer als das M ist.

9. Verfahren nach Anspruch 8, bei dem die Downlink-Daten, die zu den interferierenden UEs gesendet werden, physikalische Resourcen belegen, die physikalische Resourcen überlappen, die durch die Downlink-Daten belegt werden, die durch die Basisstation zu dem UE gesendet werden,
wobei das Verfahren ferner umfasst:
Demodulieren, durch das UE gemäß den erfassten N Sätzen von Downlink-Referenzinformationen der interferierenden UEs und Datenablaufinformationen, die von einem Downlink-Steuerkanal empfangen werden, von Daten, die durch die Basisstation gesendet werden;
wenn die Daten, die durch die Basisstation gesendet werden, demoduliert werden, Durchführen, durch das UE, einer Interferenzunterdrückung gemäß den erfassten N Sätzen von Downlink-Referenzinformationen der interferierenden UEs.

10. Verfahren nach Anspruch 8, bei dem der Parameter des Downlink-Datenverarbeitungsvermögens durch eine maximale Anzahl von Schichten von Downlink-Daten innerhalb des Verarbeitungsvermögens des UE dargestellt wird,
die maximale Anzahl von Schichten von Downlink-Daten innerhalb des Verarbeitungsvermögens des UE nicht weniger als eine maximale Anzahl von Schichten von Daten innerhalb des Demodulationsvermögens des UE ist, das durch einen UE-Kategorieparameter des UE dargestellt ist,
wobei der Parameter des Downlink-Datenverarbeitungsvermögens durch eine Anzahl von Freiheitsgraden innerhalb des Verarbeitungsvermögens des UE dargestellt wird.

11. Verfahren nach Anspruch 8, bei dem der Parameter des Downlink-Datenverarbeitungsvermögens auf den Zahlenwert eingestellt wird, der durch den Parameter des Downlink-Datenverarbeitungsvermögens abzüglich einer maximalen Anzahl von Schichten von Daten innerhalb des Demodulationsvermögens des UE dargestellt ist, das durch einen UE-Kategorieparameter des UE dargestellt ist.

12. Verfahren nach einem der Ansprüche 8 bis 11, ferner umfassend:
vor dem Senden des Parameters des Downlink-Datenverarbeitungsvermögens des UE zu der Basisstation, Empfangen, durch das UE, einer UE-Vermögen-Anfrage, die durch die Basisstation gesendet worden ist.

13. Verfahren nach einem der Ansprüche 8 bis 11, bei dem jeder der M Sätze von Downlink-Referenzinformationen der interferierenden UEs mindestens Informationen über einen Nutzerpiloten umfasst,
wobei die Informationen über den Nutzerpiloten mindestens einen Port eines Downlink-Referenzsignals umfassen.

14. Verfahren nach einem der Ansprüche 8 bis 11, ferner umfassend:
Erfassen, durch das UE gemäß den erfassten N Sätzen von Downlink-Referenzinformationen der interferierenden UEs unter Verwendung eines fortgeschrittenen minimale quadratische Abweichung-Interferenzzurückweisungskombinieren ("Minimum Mean Square Error-Interference Rejection Combining"), abgekürzt als MMSE-IRC, -Erfassungsalgorithmus, eines Datensignals, das durch die Basisstation gesendet wird, und Dekodieren des erfassten Datensignals.

15. Basisstation, umfassend:
ein Empfangsmodul (302), das ausgebildet ist zum: Empfangen eines Parameters eines Downlink-Datenverarbeitungsvermögens, das durch ein Nutzergerät, abgekürzt als UE, gesendet worden ist, das durch die Basisstation bedient wird, wobei der Parameter des Downlink-Datenverarbeitungsvermögens Informationen über eine Anzahl von Empfangsantennen des UE umfasst; und
ein Sendemodul (301), das ausgebildet ist zum: Senden, über einen Downlinksteuerkanal, von Downlink-Steuerinformationen, abgekürzt als DCI, zu dem UE, wobei die DCI X Bits umfassen, die M Sätze von Downlink-Referenzinformationen angeben, die M UE-spezifische Referenzsignalantennenports von interferierenden UEs umfassen, die Downlink-Daten empfangen, die mit einer Datendemodulation bei dem UE interferieren,
wobei das X eine positive ganze Zahl ist, die von dem M und der Größe jedes Satzes der Downlink-Referenzinformationen abhängt, und das M eine positive ganze Zahl ist, die kleiner ist als ein Zahlenwert, der durch den Parameter des Downlink-Datenverarbeitungsvermögens des UE dargestellt wird.

16. Basisstation nach Anspruch 15, bei dem die Downlink-Daten, die zu den interferierenden UEs gesendet werden, physikalische Resourcen belegen, die physikalische Resourcen überlappen, die durch die Downlink-Daten belegt werden, die durch die Basisstation zu dem UE gesendet werden,
wobei das X dynamisch in verschiedenen Übertragungszeitintervallen, abgekürzt als TTI, variiert,
wobei das X nicht größer als ein Wert ist, der durch ein System-Funkresourcensteuerungsprotokoll (System-"Radio Resource Control"-Protokoll), abgekürzt als RRC, eingestellt wird,
wobei das X nicht größer als ein Wert ist, der durch das RRC gemäß dem Parameter des Downlink-Datenverarbeitungsvermögens eingestellt wird,
wobei das X nicht größer als ein Wert ist, der dem Parameter des Downlink-Datenverarbeitungsvermögens entspricht,
wobei der Parameter des Downlink-Datenverarbeitungsvermögens durch eine maximale Anzahl von Schichten von Downlink-Daten innerhalb des Verarbeitungsvermögens des UE dargestellt wird,
wobei die maximale Anzahl von Schichten von Downlink-Daten innerhalb des Verarbeitungsvermögens des UE nicht kleiner ist als eine maximale Anzahl von Schichten von Daten innerhalb des Demodulationsvermögens des UE, das durch einen UE-Kategorieparameter des UE dargestellt ist,
wobei der Parameter des Downlink-Datenverarbeitungsvermögens durch eine Anzahl von Freiheitsgraden innerhalb des Verarbeitungsvermögens des UE dargestellt wird.

17. Basisstation nach Anspruch 15, wobei das Sendemodul (301) ferner ausgebildet ist zum: vor dem Empfangen des Parameters des Downlink-Datenverarbeitungsvermögens des UE, der durch das UE gesendet worden ist, durch das Empfangsmodul (302), Senden einer UE-Vermögen-Anfrage zu dem UE.

18. Basisstation nach einem der Ansprüche 15 bis 17, die ferner ein Einstellmodul (303) umfasst, das ausgebildet ist zum: Voreinstellen eines Satzes, der Parameter von Downlink-Referenzinformationen der interferierenden UEs enthält, und Auswählen eines Teilsatzes des Satzes als die M Sätze von Downlink-Referenzinformationen der interferierenden UEs.

19. Basisstation nach einem der Ansprüche 15 bis 17, wobei das Sendemodul (301) ausgebildet ist zum:
sequenziellen Senden der M Sätze von Downlink-Referenzinformationen der interferierenden UEs,
oder wenn Zellen, die L interferierende UEs bedienen, eine Zelle, die das UE bedient, und jedwede Zelle, die von der Zelle verschieden ist, die das UE bedient, umfassen, zuerst Senden von Downlink-Referenzinformationen der interferierenden UEs, die durch die Zelle bedient werden, die das UE bedient, und dann Senden von Downlink-Referenzinformationen der interferierenden UEs, die durch jedwede Zelle bedient werden, die von der Zelle verschieden ist, die das UE bedient, wobei L eine positive ganze Zahl ist, die nicht größer ist als das M, und die L interferierenden UEs die interferierenden UEs sind, die den M Sätzen von Downlink-Referenzinformationen, die durch die Basisstation gesendet werden, entsprechen,
oder sequenziellen Senden der M Sätze von Downlink-Referenzinformationen der interferierenden UEs gemäß Intensitäten der Interferenz der interferierenden UEs zu dem UE.

20. Nutzergerät, abgekürzt als UE, umfassend:
ein Sendemodul (403), das ausgebildet ist zum: Senden eines Parameters eines Downlink-Datenverarbeitungsvermögens des UE zu einer Basisstation, die das UE bedient, wobei der Parameter des Downlink-Datenverarbeitungsvermögens Informationen über eine Anzahl von Empfangsantennen des UE umfasst; und
ein Erfassungsmodul (401), das zum Erfassen, von X Bits in Downlink-Steuerinformationen, abgekürzt als DCI, die durch die Basistation auf einem Downlink-Steuerkanal gesendet werden, von N von M Sätzen von Downlink-Referenzinformationen ausgebildet ist, die M UE-spezifische Referenzsignalantennenports von interferierenden UEs umfassen, die Downlink-Daten empfangen, die mit einer Datendemodulation bei dem UE interferieren,
wobei das X eine positive ganze Zahl ist, die von dem M und der Größe jedes Satzes der Downlink-Referenzinformationen abhängt, und das M eine positive ganze Zahl ist, die kleiner ist als ein Zahlenwert, der durch den Parameter des Downlink-Datenverarbeitungsvermögens des UE dargestellt wird, und das N eine positive ganze Zahl von nicht größer als das M ist.

21. UE nach Anspruch 20, bei dem die Downlink-Daten, die zu den interferierenden UEs gesendet werden, physikalische Resourcen belegen, die physikalische Resourcen überlappen, die durch die Downlink-Daten belegt werden, die durch die Basisstation zu dem UE gesendet werden,
wobei das UE ferner ein Demodulierungsmodul (402) umfasst, das zum Demodulieren, gemäß den erfassten N Sätzen von Downlink-Referenzinformationen der interferierenden UEs und Datenablaufinformationen, die von einem Downlink-Steuerkanal empfangen werden, von Daten, die durch die Basisstation gesendet werden, ausgebildet ist, wobei
das Erfassungsmodul (401) ferner zum Erfassen der Datenablaufinformationen von dem Downlink-Steuerkanal ausgebildet ist,
wobei das Demodulierungsmodul (402) ferner ausgebildet ist zum: wenn die Daten, die durch die Basisstation gesendet werden, demoduliert werden, Durchführen einer Interferenzunterdrückung gemäß den erfassten N Sätzen von Downlink-Referenzinformationen der interferierenden UEs.

22. UE nach einem der Ansprüche 20 bis 21, wobei das Erfassungsmodul (401) ferner ausgebildet ist zum: bevor das Sendemodul (403) den Parameter des Downlink-Datenverarbeitungsvermögens des UE zu der Basisstation sendet, Empfangen einer UE-Vermögen-Anfrage, die durch die Basisstation gesendet worden ist.

23. UE nach einem der Ansprüche 20 bis 21, wobei das Demodulierungsmodul (402) ferner ausgebildet ist zum: Erfassen, gemäß den erfassten N Sätzen von Downlink-Referenzinformationen der interferierenden UEs unter Verwendung eines fortgeschrittenen minimale quadratische Abweichung-Interferenzzurückweisungskombinieren ("Minimum Mean Square Error-Interference Rejection Combining"), abgekürzt als MMSE-IRC, -Erfassungsalgorithmus, eines Datensignals, das durch die Basisstation gesendet wird, und Dekodieren des erfassten Datensignals.

## Revendications

1. Procédé de transmission d'informations de surdébit, comprenant :
la réception, par une station de base desservant un équipement utilisateur, abrégé en UE, d'un paramètre de capacité de traitement de données de liaison descendante de l'UE envoyé par l'UE (101), le paramètre de capacité de traitement de données de liaison descendante comprenant des informations sur un nombre d'antennes de réception de l'UE ;
l'envoi, par la station de base via un canal de commande de liaison descendante, d'informations de commande de liaison descendante, abrégées en DCI, à l'UE (102), les DCI comprenant X bits indiquant M ensembles d'informations de référence de liaison descendante comprenant M ports d'antenne de signal de référence spécifique à l'UE d'UE interférents recevant des données de liaison descendante interférant avec une démodulation de données au niveau de l'UE,
dans lequel X est un nombre entier positif dépendant de M et d'une taille de chaque ensemble des informations de référence de liaison descendante, et M est un nombre entier positif inférieur à une valeur numérique représentée par le paramètre de capacité de traitement de données de liaison descendante de l'UE.

2. Procédé selon la revendication 1, dans lequel les données de liaison descendante envoyées aux UE interférents occupent des ressources physiques coïncidant avec des ressources physiques occupées par des données de liaison descendante envoyées par la station de base à l'UE,
dans lequel X varie de façon dynamique dans différents intervalles de temps de transmission, abrégés en TTI,
dans lequel X n'est pas supérieur à une valeur établie par un protocole de commande de ressources radio, abrégée en RRC, de système,
dans lequel X n'est pas supérieur à une valeur établie par la RRC de système selon le paramètre de capacité de traitement de données de liaison descendante,
dans lequel X n'est pas supérieur à une valeur correspondant au paramètre de capacité de traitement de données de liaison descendante,
dans lequel le paramètre de capacité de traitement de données de liaison descendante est représenté par un nombre maximal de couches de données de liaison descendante dans une capacité de traitement de l'UE,
le nombre maximal de couches de données de liaison descendante dans une capacité de traitement de l'UE n'étant pas inférieur à un nombre maximal de couches de données dans une capacité de démodulation de l'UE comme représenté par un paramètre de catégorie UE de l'UE,
dans lequel le paramètre de capacité de traitement de données de liaison descendante est représenté par un nombre de degrés de liberté dans une capacité de traitement de l'UE.

3. Procédé selon la revendication 1, dans lequel le paramètre de capacité de traitement de données de liaison descendante est établi à la valeur numérique représentée par le paramètre de capacité de traitement de données de liaison descendante moins un nombre maximal de couches de données dans une capacité de démodulation de l'UE comme représenté par un paramètre de catégorie UE de l'UE.

4. Procédé selon l'une quelconque des revendications 1 à 3, comprenant en outre :
avant la réception du paramètre de capacité de traitement de données de liaison descendante de l'UE envoyé par l'UE, l'envoi, par la station de base, à l'UE, d'une interrogation de capacité d'UE,
dans lequel les DCI comprennent un paramètre d'indication de M indiquant le nombre d'ensembles d'informations de référence de liaison descendante à envoyer par la station de base,
dans lequel les DCI comprennent en outre un paramètre indiquant une mise à jour des informations de référence de liaison descendante des UE interférents,
dans lequel chacun des M ensembles d'informations de référence de liaison descendante des UE interférents comprend au moins des informations sur un pilote utilisateur,
dans lequel les informations sur le pilote utilisateur comprennent au moins un port d'un signal de référence de liaison descendante.

5. Procédé selon l'une quelconque des revendications 1 à 3, dans lequel lorsque U des M ensembles d'informations de référence de liaison descendante des UE interférents appartiennent aux UE interférents desservis par une cellule autre qu'une cellule desservant l'UE, des informations sur un pilote utilisateur dans au moins l'un des U ensembles d'informations de référence de liaison descendante comprennent au moins des informations sur un identifiant de cellule de la cellule où les informations sur le pilote utilisateur sont envoyées, U étant un nombre entier positif non supérieur à M.

6. Procédé selon l'une quelconque des revendications 1 à 3, comprenant en outre :
le préétablissement, par la station de base, d'un ensemble contenant des paramètres d'informations de référence de liaison descendante des UE interférents, et la sélection d'un sous-ensemble de l'ensemble en tant que M ensembles d'informations de référence de liaison descendante des UE interférents.

7. Procédé selon l'une quelconque des revendications 1 à 3, comprenant en outre :
l'envoi séquentiel, par la station de base, des M ensembles d'informations de référence de liaison descendante des UE interférents,
ou lorsque des cellules desservant L UE interférents comprennent une cellule desservant l'UE et toute cellule autre que la cellule desservant l'UE, l'envoi dans un premier temps, par la station de base, d'informations de référence de liaison descendante des UE interférents desservis par la cellule desservant l'UE, puis l'envoi d'informations de référence de liaison descendante des UE interférents desservis par toute cellule autre que la cellule desservant l'UE, dans lequel L est un nombre entier positif non supérieur à M, et les L UE interférents sont les UE interférents correspondant aux M ensembles d'informations de référence de liaison descendante envoyés par la station de base,
ou l'envoi séquentiel à l'UE, par la station de base, des M ensembles d'informations de référence de liaison descendante des UE interférents selon des intensités d'interférence des UE interférents.

8. Procédé de transmission d'informations de surdébit, comprenant :
l'envoi, par un équipement utilisateur, abrégé en UE, d'un paramètre de capacité de traitement de données de liaison descendante de l'UE à une station de base desservant l'UE, le paramètre de capacité de traitement de données de liaison descendante comprenant des informations sur un nombre d'antennes de réception de l'UE ;
l'acquisition, par l'UE à partir de X bits dans des informations de commande de liaison descendante, abrégées en DCI, envoyées par la station de base sur un canal de commande de liaison descendante, de N des M ensembles d'informations de référence de liaison descendante comprenant M ports d'antenne de signal de référence spécifique à l'UE d'UE interférents recevant des données de liaison descendante interférant avec une démodulation de données au niveau de l'UE,
dans lequel X est un nombre entier positif dépendant de M et d'une taille de chaque ensemble des informations de référence de liaison descendante, et M est un nombre entier positif inférieur à une valeur numérique représentée par le paramètre de capacité de traitement de données de liaison descendante de l'UE, et N est un nombre entier positif non supérieur à M.

9. Procédé selon la revendication 8, dans lequel les données de liaison descendante envoyées aux UE interférents occupent des ressources physiques coïncidant avec des ressources physiques occupées par des données de liaison descendante envoyées par la station de base à l'UE,
dans lequel le procédé comprend en outre :
la démodulation, par l'UE selon les N ensembles acquis d'informations de référence de liaison descendante des UE interférents et des informations d'ordonnancement de données acquises à partir d'un canal de commande de liaison descendante, de données envoyées par la station de base ;
lors de la démodulation des données envoyées par la station de base, la réalisation, par l'UE, d'une suppression d'interférence selon les N ensembles acquis d'informations de référence de liaison descendante des UE interférents.

10. Procédé selon la revendication 8, dans lequel le paramètre de capacité de traitement de données de liaison descendante est représenté par un nombre maximal de couches de données de liaison descendante dans une capacité de traitement de l'UE,
le nombre maximal de couches de données de liaison descendante dans une capacité de traitement de l'UE étant non inférieur à un nombre maximal de couches de données dans une capacité de démodulation de l'UE comme représenté par un paramètre de catégorie d'UE de l'UE,
dans lequel le paramètre de capacité de traitement de données de liaison descendante est représenté par un nombre de degrés de liberté dans une capacité de traitement de l'UE.

11. Procédé selon la revendication 8, dans lequel le paramètre de capacité de traitement de données de liaison descendante est établi à la valeur numérique représentée par le paramètre de capacité de traitement de données de liaison descendante moins un nombre maximal de couches de données dans une capacité de démodulation de l'UE comme représenté par un paramètre de catégorie d'UE de l'UE.

12. Procédé selon l'une quelconque des revendications 8 à 11, comprenant en outre :
avant l'envoi du paramètre de capacité de traitement de données de liaison descendante de l'UE à la station de base, la réception, par l'UE, d'une interrogation de capacité d'UE envoyée par la station de base.

13. Procédé selon l'une quelconque des revendications 8 à 11, dans lequel chacun des N ensembles d'informations de référence de liaison descendante des UE interférents comprend au moins des informations sur un pilote utilisateur,
dans lequel les informations sur le pilote utilisateur comprennent au moins un port d'un signal de référence de liaison descendante.

14. Procédé selon l'une quelconque des revendications 8 à 11, comprenant en outre :
la détection, par l'UE selon les N ensembles acquis d'informations de référence de liaison descendante des UE interférents à l'aide d'un algorithme de détection avancé de combinaison rejet d'interférence-erreur quadratique moyenne minimale, abrégée en MMSE-IRC, d'un signal de données envoyé par la station de base, et le décodage du signal de données détecté,

15. Station de base, comprenant :
un module de réception (302) configuré pour : recevoir un paramètre de capacité de traitement de données de liaison descendante envoyé par un équipement utilisateur, abrégé en UE, desservi par la station de base, le paramètre de capacité de traitement de données de liaison descendante comprenant des informations sur un nombre d'antennes de réception de l'UE ; et
un module d'envoi (301) configuré pour : envoyer, via un canal de commande de liaison descendante, des informations de commande de liaison descendante, abrégées en DCI, à l'UE, les DCI comprenant X bits indiquant M ensembles d'informations de référence de liaison descendante comprenant M ports d'antenne de signal de référence spécifique à l'UE d'UE interférents recevant des données de liaison descendante interférant avec une démodulation de données au niveau de l'UE,
dans laquelle X est un nombre entier positif dépendant de M et d'une taille de chaque ensemble des informations de référence de liaison descendante, et M est un nombre entier positif inférieur à une valeur numérique représentée par le paramètre de capacité de traitement de données de liaison descendante de l'UE.

16. Station de base selon la revendication 15, dans laquelle les données de liaison descendante envoyées aux UE interférents occupent des ressources physiques coïncidant avec des ressources physiques occupées par des données de liaison descendante envoyées par la station de base à l'UE,
dans lequel X varie de façon dynamique dans différents intervalles de temps de transmission, abrégés en TTI,
dans laquelle X n'est pas supérieur à une valeur établie par un protocole de commande de ressources radio, abrégée en RRC, de système,
dans laquelle X n'est pas supérieur à une valeur établie par la RRC de système selon le paramètre de capacité de traitement de données de liaison descendante,
dans laquelle X n'est pas supérieur à une valeur correspondant au paramètre de capacité de traitement de données de liaison descendante,
dans laquelle le paramètre de capacité de traitement de données de liaison descendante est représenté par un nombre maximal de couches de données de liaison descendante dans une capacité de traitement de l'UE,
le nombre maximal de couches de données de liaison descendante dans une capacité de traitement de l'UE n'étant pas inférieur à un nombre maximal de couches de données dans une capacité de démodulation de l'UE comme représenté par un paramètre de catégorie d'UE de l'UE ;
dans laquelle le paramètre de capacité de traitement de données de liaison descendante est représenté par un nombre de degrés de liberté dans une capacité de traitement de l'UE.

17. Station de base selon la revendication 15, dans laquelle le module d'envoi (301) est en outre configuré pour : avant que le module de réception (302) reçoive le paramètre de capacité de traitement de données de liaison descendante de l'UE envoyé par l'UE, envoyer à l'UE une interrogation de capacité d'UE.

18. Station de base selon l'une quelconque des revendications 15 à 17, comprenant en outre un module d'établissement (303) configuré pour : préétablir un ensemble contenant des paramètres d'informations de référence de liaison descendante des UE interférents, et sélectionner un sous-ensemble de l'ensemble en tant que M ensembles d'informations de référence de liaison descendante des UE interférents.

19. Station de base selon l'une quelconque des revendications 15 à 17, dans laquelle le module d'envoi (301) est configuré pour :
envoyer séquentiellement les M ensembles d'informations de référence de liaison descendante des UE interférents,
ou lorsque des cellules desservant L UE interférents comprennent une cellule desservant l'UE et toute cellule autre que la cellule desservant l'UE, envoyer dans un premier temps des informations de référence de liaison descendante des UE interférents desservis par la cellule desservant l'UE, puis envoyer des informations de référence de liaison descendante des UE interférents desservis par toute cellule autre que la cellule desservant l'UE, dans laquelle L est un nombre entier positif non supérieur à M, et les L UE interférents sont les UE interférents correspondant aux M ensembles d'informations de référence de liaison descendante envoyés par la station de base,
ou envoyer séquentiellement à l'UE les M ensembles d'informations de référence de liaison descendante des UE interférents selon des intensités d'interférence des UE interférents.

20. Équipement utilisateur, abrégé en UE, comprenant :
un module d'envoi (403) configuré pour : envoyer un paramètre de capacité de traitement de données de liaison descendante de l'UE à une station de base desservant l'UE, le paramètre de capacité de traitement de données de liaison descendante comprenant des informations sur un nombre d'antennes de réception de l'UE ; et
un module d'acquisition (401) configuré pour : acquérir, à partir de X bits dans des informations de commande de liaison descendante, abrégées en DCI, envoyées par la station de base sur un canal de commande de liaison descendante, N de M ensembles d'informations de référence de liaison descendante comprenant M ports d'antenne de signal de référence spécifique à l'UE d'UE interférents recevant des données de liaison descendante interférant avec une démodulation de données au niveau de l'UE,
dans lequel X est un nombre entier positif dépendant de M et d'une taille de chaque ensemble des informations de référence de liaison descendante, et M est un nombre entier positif inférieur à une valeur numérique représentée par le paramètre de capacité de traitement de données de liaison descendante de l'UE, et N est un nombre entier positif non supérieur à M.

21. UE selon la revendication 20, dans lequel les données de liaison descendante envoyées aux UE interférents occupent des ressources physiques coïncidant avec des ressources physiques occupées par des données de liaison descendante envoyées par la station de base à l'UE,
dans lequel l'UE comprend en outre un module de démodulation (402) configuré pour démoduler, selon les N ensembles acquis d'informations de référence de liaison descendante des UE interférents et des informations d'ordonnancement de données acquises à partir d'un canal de commande de liaison descendante, des données envoyées par la station de base, dans lequel
le module d'acquisition (401) est en outre configuré pour acquérir les informations d'ordonnancement de données à partir du canal de commande de liaison descendante,
dans lequel le module de démodulation (402) est en outre configuré pour : lors de la démodulation des données envoyées par la station de base, réaliser une suppression d'interférence selon les N ensembles acquis d'informations de référence de liaison descendante des UE interférents.

22. UE selon l'une quelconque des revendications 20 et 21, dans lequel le module d'acquisition (401) est en outre configuré pour : avant que le module d'envoi (403) envoie le paramètre de capacité de traitement de données de liaison descendante de l'UE à la station de base, recevoir une interrogation de capacité d'UE envoyée par la station de base.

23. UE selon l'une quelconque des revendications 20 et 21, dans lequel le module de démodulation (402) est en outre configuré pour : détecter, selon les N ensembles acquis d'informations de référence de liaison descendante des UE interférents à l'aide d'un algorithme de détection avancé de combinaison de rejet d'interférence-erreur quadratique moyenne minimale, abrégée en MMSE-IRC, un signal de données envoyé par la station de base, et décoder le signal de données détecté.
